# EUROPÄISCHE PATENTSCHRIFT

(11) **EP 3 569 375 B1**
(45) Veröffentlichungstag und Bekanntmachung des Hinweises auf die Patenterteilung: **20.01.2021**
(21) Anmeldenummer: 18020215.2
(22) Anmeldetag: 18.05.2018
(51) Int. Cl.: B27L 7/00, B27G 21/00, B23Q 11/08, F16P 1/02

(54) **SCHUTZEINHAUSUNG FÜR EINEN HORIZONTALHOLZSPALTER**
PROTECTION HOUSING FOR A HORIZONTAL WOOD SPLITTER
CARTER DE PROTECTION POUR FENDEUR DE BOIS HORIZONTAL

(43) Veröffentlichungstag der Anmeldung: 20.11.2019
(73) Patentinhaber: Scheppach Fabrikation von Holzbearbeitungsmaschinen GmbH, 89335 Ichenhausen (DE)
(72) Erfinder: Bindhammer, Markus, 86316 Friedberg (DE)
(74) Vertreter: Patentanwälte Munk

(56) Entgegenhaltungen:
- EP-A1- 0 868 963
- EP-A1- 3 012 076
- WO-A1-98/52715
- DE-A1- 3 711 147
- DE-U1- 9 112 911
- DE-U1-202011 107 748
- US-A- 2 350 247
- US-A- 5 025 690
- US-A1- 2016 229 080

## Beschreibung

Die Erfindung betrifft einen Horizontalholzspalter mit einem Arbeitsbereich, der durch ein feststehendes Spaltwerkzeug und eine diesem gegenüberliegende, verschiebbare Druckplatte begrenzt ist und mit einer dem Arbeitsbereich zugeordneten Schutzeinhausung mit mehreren, gegeneinander bewegbaren Einhausungsteilen, durch welche der Arbeitsbereich des Spalters zur Durchführung eines Spaltvorgangs nach außen abschirmbar und zum Einlegen und Entnehmen von Spaltgut teilweise freigebbar ist.

Bei Horizontalholzspaltern wird nicht nur eine Zweihandbedienung, sondern auch eine trennende Schutzeinrichtung zum Spaltbereich verlangt, um ein menschliches Eingreifen in den Spaltbereich, das heißt den Arbeitsbereich des Spalters, zu verhindern.

Ein Horizontalholzspalter eingangs erwähnter Art ist aus der EP 3 012 076 A1 bekannt. Bei dieser bekannten Anordnung besteht die Schutzeinhausung aus einem quaderförmigen Kasten mit einer feststehenden Rückwand und einer am oberen Rand der Rückwand schwenkbar gelagerten, im Querschnitt L-förmigen Klappe. Bei einer derartigen Anordnung ergibt sich infolge der geforderten Mindestabstände für die Schutzeinhausung ein vergleichsweise voluminöser Bauraum, was insbesondere die Lagerung und den Versand erschweren kann. Außerdem kann sich die Bedienung der Klappe und damit die Beschickung des Spalters mit Spaltholz sowie die Entfernung der gespaltenen Scheite als umständlich und schwierig erweisen.

Die DE 37 11 147 A1 zeigt eine Teleskopabdeckung für eine Horizontalwerkzeugmaschine mit einer Anzahl von ineinandergreifenden, teleskopartig gegeneinander verschiebbaren Abdeckelementen. Die an einen Holzspalter gestellten Anforderungen treten bei Werkzeugmaschinen nicht auf.

Die US 2,350,247 A zeigt eine Teleskopabdeckung für eine Tischbohrmaschine oder dergleichen. Auch hier fehlt ein Bezug zu einem Horizontalholzspalter.

Aus der DE 89 14 734 U1 ergibt sich zwar ein Vertikalholzspalter mit einem verschiebbaren Schutzkorb. Dieser muss jedoch vertikal verstellt werden und ist auch nicht Teil einer zweiteiligen, teleskopartig verlägner- oder verkürzbaren Schutzeinhausung.

Hiervon ausgehend ist es die Aufgabe der vorliegenden Erfindung, eine Anordnung eingangs erwähnter Art mit einfachen und kostengünstigen Mitteln so zu verbessern, dass eine vergleichsweise kompakte Bauweise und gute Bedienungsfreundlichkeit erreicht werden.

Diese Aufgabe wird erfindungsgemäß dadurch gelöst, dass die Schutzeinhausung tunnelförmig ausgebildet ist und über ihrer Länge unterteilt und in der Arbeitsrichtung des Spalters teleskopartig verlänger- und verkürzbar ist.

Diese Maßnahmen stellen sicher, dass zum Einlegen und zum Entnehmen von Spaltholz die Teile der Schutzeinhausung einfach übereinander geschoben werden können, was eine gute Zugänglichkeit des Arbeitsbereichs ergibt und daher die Bedienung vereinfacht und erleichtert. Außerdem wird durch die erfindungsgemäßen Maßnahmen erreicht, dass der Bauraum in vertretbaren Grenzen bleibt.

Vorteilhafte Ausgestaltungen und zweckmäßige Fortbildungen der übergeordneten Maßnahmen sind in den Unteransprüchen angegeben.

So kann die Schutzeinhausung zweckmäßig einen einen Endbereich bildenden, feststehenden Einhausungsabschnitt und einen diesen von außen umfassenden, verschiebbaren Einhausungsabschnitt aufweisen. Dadurch, dass ein feststehender und ein verschiebbarer Einhausungsabschnitt vorgesehen sind, ergibt sich ein sinnfälliger, eine einfache Bedienbarkeit unterstützender Aufbau.

Vorteilhaft kann der feststehende Einhausungsabschnitt einem ein feststehendes Spaltwerkzeug enthaltenden Endbereich des Spalters zugeordnet sein, so dass der Beschickungsbereich durch Verschieben des verschiebbaren Einhausungsabschnitts geöffnet und geschlossen werden kann.

Eine weitere zweckmäßige Maßnahme kann darin bestehen, dass die Einhausungsabschnitte einen portalförmigen, mittig vorzugsweise trapezförmig nach oben erhöhten Querschnitt aufweisen. Dies begünstigt die Erzielung einer kompakten Bauform und ermöglicht in vorteilhafter Weise dennoch die Verarbeitung von Spaltholz mit vergleichsweise großem Durchmesser.

In weiterer Fortbildung der übergeordneten Maßnahmen kann der verschiebbare Einhausungsabschnitt vorzugsweise im Bereich seiner unteren Randkanten mit Gleitlagerelementen versehen sein, die auf stationären, vorzugsweise als Rundprofilabschnitte ausgebildeten Führungsschienen geführt sind. Hierdurch wird eine leichtgängige Verschiebbarkeit des verschiebbaren Einhausungsabschnitts gewährleistet, was auch die Bedienung erleichtert.

Eine weitere Bedienungserleichterung wird vorteilhaft dadurch erreicht, dass der Verschiebeweg des vorzugsweise mit einem Griff versehenen, verschiebbaren Einhausungsabschnitts durch eine Anschlageinrichtung begrenzt ist, die vorzugsweise ein in ein Langloch eingreifendes Anschlagelement aufweisen kann.

Vorteilhaft kann dem verschiebbaren Einhausungsabschnitt auch eine Fixiereinrichtung zugeordnet sein, die vorzugsweise einen in ein Langloch eingreifenden Klemmhebel aufweist. Diese Maßnahme ermöglicht in vorteilhafter Weise eine Sicherung des verschiebbaren Einhausungsabschnitts in jeder gewünschten Position, was insbesondere für Transportzwecke erwünscht ist.

Eine weitere vorteilhafte Maßnahme kann darin bestehen, dass ein vom feststehenden Einhausungsabschnitt in Arbeitsrichtung des Spalters beabstandeter, feststehender Frontschutz vorgesehen ist, dessen Abstand vom feststehenden Einhausungsabschnitt durch den verschiebbaren Einhausungsabschnitt überbrückbar ist. Durch den zusätzlichen Frontschutz wird der frontseitige Abschnitt des Arbeitsbereichs abgesichert, ohne die Einleg- und Entnehmbarkeit von Spaltgut zu behindern. Da die Bedienungseinrichtung als Zweihandbedienung ausgebildet sein muss, genügt es in vorteilhafter Weise, wenn der Frontschutz auf die der Bedienungsseite gegenüberliegende Seite des Arbeitsbereichs beschränkt ist. Zweckmäßig kann der Frontschutz einfach als feststehendes, vertikales Wandelement ausgebildet sein.

Zur weiteren Steigerung der Bedienungsfreundlichkeit können die Einhausungsabschnitte und der Frontschutz günstig mit vorzugsweise als Langlöcher ausgebildeten Durchblickausnehmungen versehen sein, so dass der Spaltvorgang auch bei geschlossener Schutzeinhausung beobachtet werden kann.

In weiterer Fortbildung der übergeordneten Maßnahmen können auch den von den Einhausungsabschnitten abdeckbaren Arbeitsbereich nach unten verschließende, feststehende Wandelemente vorgesehen sein, die vorteilhaft ein Einlegeprisma zur Aufnahme von Spaltgut bilden können. Hierdurch wird eine korrekte, reproduzierbare Lage des eingelegten Spaltguts erreicht, was einen sicheren und störungsfreien Spaltvorgang gewährleistet.

Eine weitere, besonders zu bevorzugende Fortbildung der übergeordneten Maßnahmen kann darin bestehen, dass dem verschiebbaren Einhausungsabschnitt ein Endlagensensor zugeordnet ist, der die Betätigung des Spalters sperrt, solange die Schutzeinhausung nicht geschlossen ist. Hierdurch wird in vorteilhafter Weise eine versehentliche, außerplanmäßige Betätigung des Spalters bei nicht vollständig geschlossener Schutzeinhausung verhindert und damit die Sicherheit erhöht.

Zweckmäßig kann der Endlagensensor als Schalteinrichtung mit einem Schalter und einem in diesen einrastbaren Schalterstößel ausgebildet sein. Hierbei ergibt sich in vorteilhafter Weise eine zuverlässige Selbsthaltekraft der Schalteinrichtung, die ein selbsttätiges Öffnen der Schutzeinhausung während eines Spaltvorgangs verhindert.

Weitere vorteilhafte Ausgestaltungen und zweckmäßige Fortbildungen der übergeordneten Maßnahmen ergeben sich aus der nachstehenden Beschreibung eines in den Zeichnungen dargestellten, bevorzugten Ausführungsbeispiels.

In der Zeichnung zeigen:
- Figur 1: einen erfindungsgemäßen Horizontalholzspalter mit Schutzeinhausung in geöffnetem Zustand,
- Figur 2: die Anordnung gemäß Figur 1 mit geschlossener Schutzeinhausung,
- Figur 3: einen im Bereich der Schutzeinhausung geführten vertikalen Querschnitt durch die Anordnung gemäß Figuren 1 und 2,
- Figur 4: ein Beispiel für die Gleitlagerung des verschiebbaren Einhausungsabschnitts und
- Figur 5: ein Beispiel für die Position und Form eines dem verschiebbaren Einhausungsabschnitt zugeordneten Endlagensensors.

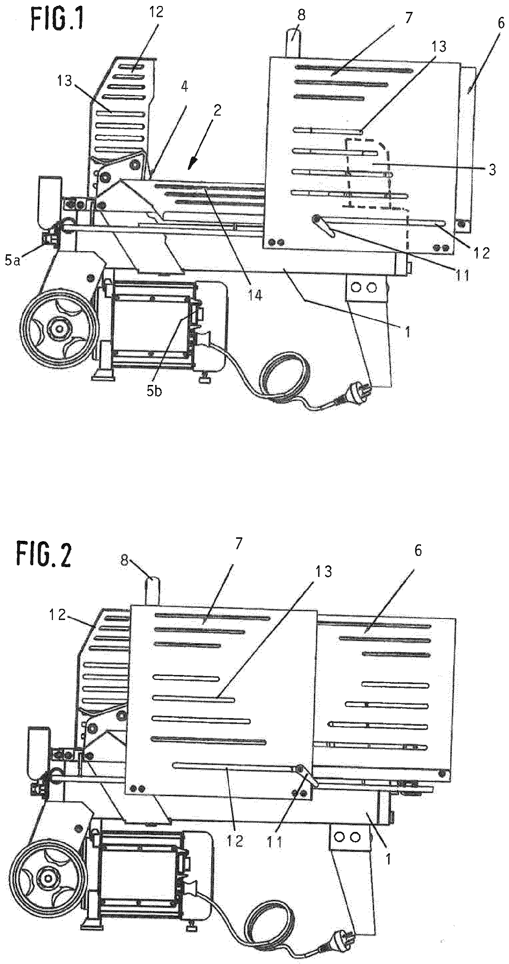

Der den Zeichnungen zugrundeliegende Horizontalholzspalter besteht, wie am besten aus Figuren 1 und 2 erkennbar ist, aus einem Bock mit einem horizontalen Tragholm 1 für die seinen Arbeitsbereich 2 begrenzenden Spaltorgane in Form eines in Figur 1 lediglich gestrichelt angedeuteten, stationären Spaltwerkzeugs 3 einerseits und einer diesem gegenüberliegenden, hydraulisch verschiebbaren Druckplatte 4 andererseits. Der zwischen Spaltwerkzeug 3 und Druckplatte 4 sich befindende Arbeitsbereich 2 wird zur Durchführung eines Spaltvorgangs mit Spaltgut, beispielsweise in Form von Rundholzabschnitten, beschickt. Zur Betätigung des Antriebs der Druckplatte 4 ist eine Zweihandbedienungseinrichtung, hier mit zwei voneinander entfernten Schaltelementen 5a, 5b, welche die Bedienungsperson gemeinsam mit jeweils einer Hand betätigen muss, so dass keine Hand zum Eingreifen in den Arbeitsbereich 2 übrig ist. Die Seite, auf der sich die Schaltelemente 5a, b der Zweihandbedienungseinrichtung befinden, ist die Bedienungsseite.

Dem Arbeitsbereich 2 ist eine Schutzeinhausung zugeordnet, welche den Arbeitsbereich 2 zur Durchführung eines Spaltvorgangs nach außen abschirmt und vor und nach einem Spaltvorgang soweit freigibt, dass ein Einlegen beziehungsweise Entnehmen des Spaltguts möglich ist. Die Schutzeinhausung ist tunnelförmig ausgebildet und über ihrer Länge in zwei teleskopartig ineinander eingreifende Einhausungsabschnitte 6, 7 unterteilt und dementsprechend in Arbeitsrichtung der Spaltorgane verlänger- und verkürzbar, wie sich aus den Figuren 1 und 2 ergibt. In Figur 1 ist die Schutzeinhausung so verkürzt, dass der Arbeitsbereich 2 zum Einlegen und Entnehmen von Spaltgut freigegeben ist. In Figur 2 ist die Schutzeinhausung so verlängert, dass der Arbeitsbereich 2 vollständig abgedeckt ist.

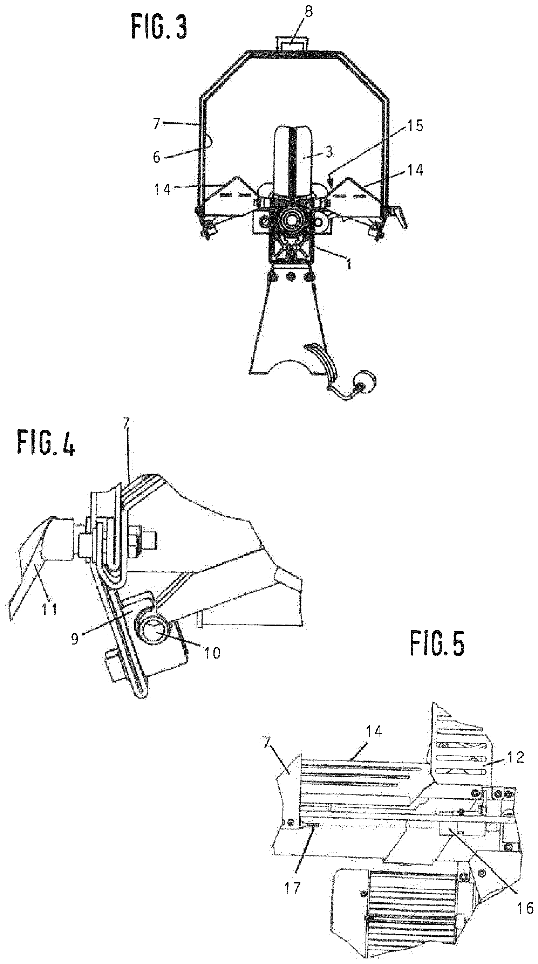

Es wäre denkbar, dass beide Einhausungsabschnitte 6, 7 in Arbeitsrichtung der Spaltorgane verschiebbar sind. Im dargestellten Beispiel ist der Einhausungsabschnitt 6, der dem das stationäre Spaltmesser 3 enthaltenden Endbereich des Spalters zugeordnet ist, stationär angeordnet. Der weitere Einhausungsabschnitt 7 ist demgegenüber in Arbeitsrichtung der Spaltorgane, also hier in horizontaler Richtung, verschiebbar. Der verschiebbare Einhausungsabschnitt 7 ist dabei, wie aus Figur 3 hervorgeht, so ausgebildet, dass er den feststehenden Einhausungsabschnitt 6 von außen übergreift, was die Einleitung der Verschiebebewegung erleichtert. Zur Einleitung der Verschiebebewegung des verschiebbaren Einhausungsabschnitts 7 kann dieser zweckmäßig mit einem Griff 8 versehen sein.

Die beiden einander übergreifenden Einhausungsabschnitte 6, 7 besitzen, wie Figur 3 weiter zeigt, einen portalförmigen, in der Mitte trapezförmig erhöhten Querschnitt, so dass sich eine kompakte Bauform ergibt und dennoch eine an die Oberseite von Rundholz angepasste Querschnittsform mit einer großen lichten Weite, so dass auch vergleichsweise dickes Spaltholz verarbeitet werden kann. Der vordere, stationäre Einhausungsabschnitt 6 kann eine einen stirnseitigen Zugang verhindernde vordere, das heißt in den Figuren 1 und 2 nach rechts weisende Stirnwand aufweisen. Vielfach genügt es jedoch, wenn dieser Einhausungsabschnitt 6 das stationäre Spaltmesser 3 so weit nach vorne überragt, dass dieses von der offenen Stirnseite her von einer dort sich befindenden Person nicht mit einer Hand erreichbar ist.

Der verschiebbare Einhausungsabschnitt 7 ist, wie am besten aus Figur 4 erkennbar ist, im Bereich der unteren, nach innen geneigten Randkanten seiner Seitenschenkel mit Gleitlagerelementen 9 versehen, die auf stationären, horizontalen Führungsschienen 10 geführt sind. Zur Bildung der Führungsschienen 10 können zweckmäßig Rundprofilabschnitte vorgesehen sein. Um eine unbeabsichtigte Verschiebebewegung zu verhindern und eine Feststellung des verschiebbaren Einhausungsabschnitts 7 in jeder gewünschten Position zu ermöglichen, ist dem verschiebbaren Einhausungsabschnitt 7 eine Fixiereinrichtung zugeordnet. Diese kann einen an einem Einhausungsabschnitt, beispielsweise am feststehenden Einhausungsabschnitt 6 angebrachten Klemmhebel 11 aufweisen, dessen Schaft ein zugeordnetes Langloch 12 des verschiebbaren Einhausungsabschnitts 7 durchgreift, wie aus den Figuren 1 und 2 erkennbar ist. Der das Langloch 12 durchgreifende Schaft des Klemmhebels 11 kann gleichzeitig als Anschlag fungieren, der den maximalen Verschiebeweg des verschiebbaren Einhausungsabschnitts 7 begrenzt, wie aus den Figuren 1 und 2, welche die ganz geöffnete und ganz geschlossene Stellung des verschiebbaren Einhausungsabschnitts 7 zeigen, ersichtlich ist.

Um auch noch den bei geschlossener Schutzeinhausung dieser nach hinten benachbarten Frontbereich gegen einen unzulässigen Eingriff in den Arbeitsbereich 2 abzusichern, ist ein aus den Figuren 1 und 2 ersichtlicher Frontschutz 12 vorgesehen. Dieser kann beidseitig vorgesehen sein und jeweils als feststehendes, vertikales Wandelement ausgebildet sein. Im dargestellten Beispiel ist der Frontschutz 12 auf die der Bedienungsseite gegenüberliegenden Seite beschränkt. Auf der Bedienungsseite kann ein derartiger Frontschutz entfallen, da die Bedienungseinrichtung als Zweihandbedienung ausgebildet ist, so dass die Bedienungsperson keine Hand frei hat, mit welcher sie versehentlich in den Arbeitsbereich 2 eingreifen könnte. Das den Frontschutz 12 bildende, vertikale Wandelement flankiert praktisch den Bereich der in ihre Ausgangsposition gebrachten Druckplatte 4. Die Breite des Frontschutzes 12 ist so, dass der Abstand zwischen dem feststehenden Einhausungsabschnitt 6 und dem Frontschutz 12 durch den verschiebbaren Einhausungsabschnitt 7 überbrückbar ist, wie aus Figur 2 anschaulich hervorgeht.

Die beiden Einhausungsabschnitte 6 und 7 und vorzugsweise auch das den Frontschutz 12 bildende Wandelement können mit zweckmäßig als Langlöcher ausgebildeten Durchblicköffnungen 13 versehen sein, die eine Beobachtung des Spaltvorgangs bei geschlossener Schutzeinhausung ermöglichen.

Der Arbeitsbereich 2 ist, wie aus Figuren 1 und 3 ersichtlich ist, auch nach unten durch den Holm 1 flankierende, seitliche Wandelemente 14 verschlossen, so dass auch von unten ein Eingriff in den Arbeitsbereich 2 unmöglich ist. Die Wandelemente 14 sind, wie Figur 3 anschaulich zeigt, so ausgebildet, dass sich ein Einlegeprisma 15 zur Aufnahme des Spaltguts ergibt, so dass dieses exakt positionierbar ist.

Als weitere Sicherheitsmaßnahme ist dem verschiebbaren Einhausungsabschnitt 7 eine Endlagen-Sensoreinrichtung zugeordnet, welche die Betätigung des Spalters sperrt, solange die Schutzeinhausung nicht geschlossen ist, das heißt solange der verschiebbare Einhausungsabschnitt 7 nicht die der Figur 2 zugrundeliegende geschlossene Endlage einnimmt. Hierzu kann die Endlagen-Sensoreinrichtung einen in der Energieversorgung der der antreibbaren Druckplatte 4 zugeordneten Antriebseinrichtung angeordneten Schalter aufweisen, der durch den verschiebbaren Einhausungsabschnitt 7 betätigbar ist.

Im dargestellten Ausführungsbeispiel gemäß Figur 5 enthält die Endlagen-Sensoreinrichtung einen in der Energieversorgungsleitung der der antreibbaren Druckplatte 4 zugeordneten Antriebseinrichtung angeordneten Schalter 16 und einen am in Verschlussrichtung vorderen Ende des verschiebbaren Einhausungsabschnitt 7 angeordneten Schalterstößel 17, der beim Schließen der Schutzeinhausung auf den Schalter 16 zu bewegt wird, wie in Figur 5 durch eine punktierte Linie angedeutet ist, und der in der Schließstellung des verschiebbaren Einhausungsabschnitts 7 in den Schalter 16 einrastet. Durch diese Rastung ergibt sich eine gewisse Selbsthaltekraft, welche verhindert, dass der verschiebbare Einhausungsabschnitt 7 während des Spaltvorgangs selbsttätig in Öffnungsrichtung bewegt wird.

Vorstehend ist zwar ein bevorzugtes Ausführungsbeispiel der Erfindung näher erläutert, ohne, dass jedoch hiermit eine Beschränkung verbunden sein soll. So wäre es beispielsweise auch denkbar, zur Bildung der der Schutzeinhausung zugrundeliegenden Teleskopeinrichtung mehrere, tunnelförmige Teleskopausschübe vorzusehen. Ebenso wäre es ohne Weiteres denkbar, anstelle einer Gleitlagerung jedes verschiebbaren Einhausungsabschnitts eine Wälzlagerung vorzusehen.

## Patentansprüche

1. Horizontalholzspalter mit einem Arbeitsbereich (2), der durch ein feststehendes Spaltwerkzeug (3) und eine diesem gegenüberliegende, verschiebbare Druckplatte (4) begrenzt ist und mit einer dem Arbeitsbereich (2) zugeordneten Schutzeinhausung mit mehreren, gegeneinander bewegbaren Einhausungsteilen, durch welche der Arbeitsbereich (2) des Spalters zur Durchführung eines Spaltvorgangs nach außen abschirmbar und zum Einlegen und Entnehmen von Spaltgut teilweise freigebbar ist, **dadurch gekennzeichnet, dass** die Schutzeinhausung tunnelförmig ausgebildet, über ihrer Länge unterteilt und in der Arbeitsrichtung des Spalters teleskopartig verlänger- und verkürzbar ist.

2. Horizontalholzspalter nach Anspruch 1 **gekennzeichnet durch** einen einen Endbereich der Schutzeinhausung bildenden, feststehenden Einhausungsabschnitt (6) und einen diesen von außen umfassenden, verschiebbaren Einhausungsabschnitt (7).

3. Horizontalholzspalter nach Anspruch 2, **dadurch gekennzeichnet, dass** der feststehende Einhausungsabschnitt (6) dem ein feststehendes Spaltwerkzeug (3) enthaltenden Endbereich des Arbeitsbereichs (2) zugeordnet ist.

4. Horizontalholzspalter nach einem der vorhergehenden Ansprüche, **dadurch gekennzeichnet, dass** die Einhausungsabschnitte (6), (7) einen portalförmigen, mittig vorzugsweise trapezförmig nach oben erhöhten Querschnitt aufweisen.

5. Horizontalholzspalter nach einem der vorhergehenden Ansprüche, **dadurch gekennzeichnet, dass** der verschiebbare Einhausungsabschnitt (7) vorzugsweise im Bereich seiner unteren, seitlichen Randkanten mit Gleitlagerelementen (9) versehen ist, die auf stationären, vorzugsweise als Rundprofilabschnitte ausgebildeten Führungsschienen (10) geführt sind.

6. Horizontalholzspalter nach einem der vorhergehenden Ansprüche, **dadurch gekennzeichnet, dass** der Verschiebeweg des vorzugsweise mit einem Griff (8) versehenen, verschiebbaren Einhausungsabschnitts (7) durch eine Anschlageinrichtung begrenzt ist, die vorzugsweise ein in ein Langloch eingreifendes Anschlagelement aufweist.

7. Horizontalholzspalter nach einem der vorhergehenden Ansprüche, **dadurch gekennzeichnet, dass** dem verschiebbaren Einhausungsabschnitt (7) eine Fixiereinrichtung zugeordnet ist, die vorzugsweise einen in ein Langloch (12) eingreifenden Klemmhebel (11) aufweist.

8. Horizontalholzspalter nach einem der vorhergehenden Ansprüche, **dadurch gekennzeichnet, dass** ein vom feststehenden Einhausungsabschnitt (6) in Schließrichtung des verschiebbaren Einhausungsabschnitts (7) beabstandeter, feststehender Frontschutz (12) vorgesehen ist, dessen Abstand vom feststehenden Einhausungsabschnitt (6) durch den verschiebbaren Einhausungsabschnitt (7) überbrückbar ist.

9. Horizontalholzspalter nach Anspruch 8, **dadurch gekennzeichnet, dass** der Frontschutz (12) als im Bereich der der Bedienungsseite des Spalters gegenüberliegenden Spalterseite vorgesehenes, feststehendes, vertikales Wandelement ausgebildet ist.

10. Horizontalholzspalter nach einem der vorhergehenden Ansprüche, **dadurch gekennzeichnet, dass** wenigstens ein Einhausungsabschnitt (6) bzw. (7), vorzugsweise beide Einhausungsabschnitte (6), (7) und vorzugsweise auch der Frontschutz (12) mit vorzugsweise als Langlöcher ausgebildeten Durchblickausnehmungen (13) versehen sind.

11. Horizontalholzspalter nach einem der vorhergehenden Ansprüche, **dadurch gekennzeichnet, dass** der von den Einhausungsabschnitten (6), (7) abschirmbare Arbeitsbereich (2) nach unten durch feststehende Wandelemente (14) verschließbar ist.

12. Horizontalholzspalter nach Anspruch 11, **dadurch gekennzeichnet, dass** die unteren Wandelemente (14) ein Einlegeprisma (15) zur Aufnahme des Spaltguts bilden.

13. Horizontalholzspalter nach einem der vorhergehenden Ansprüche, **dadurch gekennzeichnet, dass** dem verschiebbaren Einhausungsabschnitt (7) eine Endlagen-Sensoreinrichtung zugeordnet ist, welche die Betätigung des Spalters sperrt, solange die Schutzeinhausung nicht geschlossen ist.

14. Horizontalholzspalter nach Anspruch 13, **dadurch gekennzeichnet, dass** die Endlagen-Sensoreinrichtung als Schalteinrichtung mit einem Schalter (16) und einem in diesen einrastbaren Schaltstößel (17) ausgebildet ist.

## Claims

1. Horizontal wood splitter, having a working area (2) which is delimited by a fixed splitting tool (3) and a displaceable pressure plate (4) opposite thereto, and having a protection housing which is assigned to the working area (2) and comprises several housing parts which can be moved towards each other, by means of which the working area (2) of the splitter can be shielded from the outside for carrying out a splitting operation and can be partially exposed for the insertion and removal of splitting material, **characterized in that** the protection housing is of tunnel-shaped design, is subdivided over its length and can be extended and shortened telescopically in the working direction of the splitter.

2. Horizontal wood splitter according to claim 1, **characterized by** a fixed housing section (6) forming an end region of the protection housing and a displaceable housing section (7) surrounding the latter from the outside.

3. Horizontal wood splitter according to claim 2, **characterized in that** the fixed housing section (6) is associated with the end region of the working area (2) containing a fixed splitting tool (3).

4. Horizontal wood splitter according to one of the preceding claims, **characterized in that** the housing sections (6), (7) have a portal-shaped, centrally, preferably trapezoidally, upwardly raised cross-section.

5. Horizontal wood splitter according to one of the preceding claims, **characterized in that** the displaceable housing section (7) is provided, preferably in the region of its lower lateral edges, with plain bearing elements (9) which are guided on stationary guide rails (10) preferably designed as round profile sections.

6. Horizontal wood splitter according to one of the preceding claims, **characterized in that** the displacement path of the displaceable housing section (7), preferably provided with a handle (8), is limited by a stop device, which preferably has a stop element engaging in an elongated hole.

7. Horizontal wood splitter according to one of the preceding claims, **characterized in that** the displaceable housing section (7) is associated with a fixing device which preferably has a clamping lever (11) engaging in an elongated hole (12).

8. Horizontal wood splitter according to one of the preceding claims, **characterized in that** a fixed front guard (12) is provided, which is spaced from the fixed housing section (6) in the closing direction of the displaceable housing section (7) and whose distance from the fixed housing section (6) can be bridged by the displaceable housing section (7).

9. Horizontal wood splitter according to claim 8, **characterized in that** the front guard (12) is designed as a fixed, vertical wall element provided in the area of the splitting side opposite the operating side of the splitter.

10. Horizontal wood splitter according to one of the preceding claims, **characterized in that** at least one housing section (6) or (7), preferably both housing sections (6), (7), and preferably also the front guard (12), are provided with viewing recesses (13) preferably designed as elongated holes.

11. Horizontal wood splitter according to one of the preceding claims, **characterized in that** the working area (2) which can be shielded from the housing sections (6), (7) can be closed downwards by fixed wall elements (14).

12. Horizontal wood splitter according to claim 11, **characterized in that** the lower wall elements (14) form an insertion prism (15) for accommodating the splitting material.

13. Horizontal wood splitter according to one of the preceding claims, **characterized in that** an end-position sensor device is associated with the displaceable housing section (7), which blocks the operation of the splitter as long as the protection housing is not closed.

14. Horizontal wood splitter according to claim 13, **characterized in that** the end-position sensor device is designed as a switching device having a switch (16) and a switching plunger (17) which can be latched into said switch.

## Revendications

1. Fendeur de bois horizontal avec une zone de travail (2) délimitée par un outil de fendage (3) fixe et une plaque d'appui (4) capable de translation faisant face à celui-ci et avec un carter de protection associé à la zone de travail (2) et comprenant plusieurs sections de carter mobiles les unes vers les autres, qui peuvent isoler la zone de travail (2) du fendeur de l'extérieur en vue de l'exécution d'une opération de fendage et peuvent être partiellement écartés pour mettre en place et retirer de la matière à fendre, **caractérisé en ce que** le carter de protection est réalisé en forme de tunnel, divisé sur sa longueur, et peut être allongé et raccourci de façon télescopique dans le sens de travail du fendeur.

2. Fendeur de bois horizontal selon la revendication 1, **caractérisé en ce qu'**il comporte une section de carter fixe (6) formant une zone d'extrémité du carter de protection et une section de carter mobile (7) enveloppant celle-ci par l'extérieur.

3. Fendeur de bois horizontal selon la revendication 2, **caractérisé en ce que** la section de carter fixe (6) est associée à la zone d'extrémité de la zone de travail (2) qui contient un outil de fendage (3) fixe.

4. Fendeur de bois horizontal selon l'une des revendications précédentes, **caractérisé en ce que** les sections de carter (6, 7) présentent une section en forme de portique, dont la hauteur au milieu est de préférence agrandie pour former un trapèze.

5. Fendeur de bois horizontal selon l'une des revendications précédentes, **caractérisé en ce que** la section de carter mobile (7) est munie de préférence, au niveau de ses bords latéraux inférieurs, d'éléments de palier lisse (9) qui sont guidés sur des rails de guidage (10) fixes, de préférence réalisés comme des sections de profilé rond.

6. Fendeur de bois horizontal selon l'une des revendications précédentes, **caractérisé en ce que** le trajet de translation de la section de carter mobile (7), de préférence munie d'une poignée (8), est délimité par une installation de butée présentant de préférence un élément de butée qui se met en prise dans un trou oblong.

7. Fendeur de bois horizontal selon l'une des revendications précédentes, **caractérisé en ce que** la section de carter mobile (7) est associée à un dispositif de fixation présentant de préférence un levier de serrage (11) qui se met en prise dans un trou oblong (12).

8. Fendeur de bois horizontal selon l'une des revendications précédentes, **caractérisé en ce qu'**il est prévu une protection de face avant (12) fixe écartée de la section de carter fixe (6) dans le sens de fermeture de la section de carter mobile (7), dont l'écart par rapport à la section de carter fixe (6) peut être couvert par la section de carter mobile (7).

9. Fendeur de bois horizontal selon la revendication 8, **caractérisé en ce que** la protection de face avant (12) est conformée comme un élément de paroi vertical fixe prévu sur le côté du fendeur opposé au côté de commande du fendeur.

10. Fendeur de bois horizontal selon l'une des revendications précédentes, **caractérisé en ce qu'**au moins une section de carter (6 ou 7), de préférence les deux sections de carter (6, 7) et de préférence aussi la protection de face avant (12) sont munies d'ouvertures de visibilité (13) conformées de préférence comme des trous oblongs.

11. Fendeur de bois horizontal selon l'une des revendications précédentes, **caractérisé en ce que** la zone de travail (2) qui peut être isolée par les sections de carter (6, 7) peut être fermée par des éléments de paroi (14) fixes.

12. Fendeur de bois horizontal selon la revendication 11, **caractérisé en ce que** les éléments de paroi (14) inférieurs forment un prisme d'introduction (15) destiné à recevoir la matière à fendre.

13. Fendeur de bois horizontal selon l'une des revendications précédentes, **caractérisé en ce que** la section de carter mobile (7) est associée à un dispositif de capteur de fin de course qui bloque l'actionnement du fendeur tant que le carter de protection n'est pas fermé.

14. Fendeur de bois horizontal selon la revendication 13, **caractérisé en ce que** le dispositif de capteur de fin de course est conformé comme un dispositif de commutation avec un commutateur (16) et un poussoir de commutateur (17) qui peut s'enclencher dans celui-ci.
